Europäisches Patentamt

European Patent Office

Office européen des brevets

(19)

(11) Veröffentlichungsnummer: **0 082 494**
**B1**

(12) **EUROPÄISCHE PATENTSCHRIFT**

(45) Veröffentlichungstag der Patentschrift:
**27.03.85**

(51) Int. Cl.⁴: **B 29 C 47/76**

(21) Anmeldenummer: **82111701.7**

(22) Anmeldetag: **16.12.82**

(54) Schneckenextruder.

(30) Priorität: **22.12.81 DE 3150719**

(43) Veröffentlichungstag der Anmeldung:
**29.06.83 Patentblatt 83/26**

(45) Bekanntmachung des Hinweises auf die Patenterteilung:
**27.03.85 Patentblatt 85/13**

(84) Benannte Vertragsstaaten:
**AT FR GB IT LU SE**

(56) Entgegenhaltungen:
**CH - A - 420 580**
**DE - A - 2 160 062**
**DE - B - 2 235 784**
**US - A - 1 283 947**
**US - A - 4 178 104**

(73) Patentinhaber: **UNIROYAL ENGLEBERT Reifen GmbH, Hüttenstrasse 7, D-5100 Aachen (DE)**

(72) Erfinder: **Harms, Engelbert G. Dr. Ing., Dipl.-Ing., Auf dem Anger 11, D-5100 Aachen (DE)**

## Beschreibung

Die Erfindung bezieht sich auf einen Schneckenextruder zum Mischen, Homogenisieren und Entgasen von hochviskosen Kautschukmischungen und ähnlich sich verhaltenden Thermoplasten gemäß dem ersten Teil des Anspruches 1 (DE-B2-2 235 784). Der Schneckenextruder besteht im wesentlichen aus einem Schneckengehäuse mit zylindrischer Gehäusebohrung und einer darin drehbaren Schnecke.

Der Schneckenextruder weist einen Schneckenabschnitt zum Einziehen und Aufnehmen des zu verarbeitenden Materials, einen Schneckenabschnitt zum Entgasen des im Extruder geförderten Materials und einen Schneckenabschnitt zum Weiterbefördern, Ausstoßen bzw. Auspressen des gemischten, entgasten, homogenisierten Materials auf. Dabei umfaßt der Entgasungsabschnitt ein Massestaumittel und eine in Extrusionsrichtung folgende druckreduzierte Zone. Der Schneckengehäuseraum in diesem Bereich ist durch einen Kanal oder Schacht oder dergleichen Mittel mit der Atmosphäre oder mit einer Unterdruckquelle verbunden.

Der Schneckenextruder weist des weiteren vom Schneckengehäuse radial nach innen sich erstreckende, umfangsverteilt angeordnete Stifte oder Zapfen auf und der Schneckensteg ist an der Stelle der Stifte entsprechend unterbrochen.

Bei der Extrusion von Kautschukmischungen, insbesondere hochviskosen Kautschukmischungen, oder von ähnlich sich verhaltenden Thermoplasten ist eine Entgasung dann erforderlich, wenn die Mischung Gas- und/oder Feuchtigkeitsbestandteile enthält.

Bei der Extrusion von Kautschukmischungen zu Profilen, Schläuchen, Schnüren und anderem mehr wie auch bei der Kabelummantelung mit anschließender, in der Regel druckloser Vulkanisation können die in der Mischung vorliegenden Luft- oder/und Feuchtigkeitsanteile zu einer unerwünschten Porösität des Vulkanisats führen.

Um diesen Qualitätsmangel zu beseitigen, werden Kautschukmischungen bzw. Thermoplastmassen entgast. Dies erfolgt in sogenannten Entgasungsbereichen oder Vakuumzonen der jeweils verwendeten Extruder. Dabei wird die Mischung im Anschluß an einer Stauzone in eine volumenvergrößerte Entspannungszone dosiert, in der sie sich entspannen, neue Oberflächen bilden und entgast werden kann.

Es ist bei einem Schneckenextruder bekannt, die Schnecke im Entgasungsbereich mit einem Stauring oder Schlitzring zu versehen. Unmittelbar darauf folgend ist ein Evakuierungskanal im Gehäuse angeordnet. In diesem Bereich sind des weiteren gehäusefeste Stifte vorgesehen. Die Kautschukmischung wird zunächst durch den engen Ringspalt geschert und erhält dabei eine filmähnliche Form, die durch die Stifte in Einzelteile aufgeteilt wird. In dieser Phase werden die Gase und Feuchteteilchen abgesaugt. Der Evakuierungskanal ist für die gesamte Entgasungszone vorgesehen. Um effektiv entgasen zu können, muß ein hohes Vakuum angelegt werden. Dennoch ist nicht gewährleistet, daß alle eingeschlossenen Gaspartikel oder Feuchteteilchen zuverlässig aus der extrudierten Masse entfernt werden (US-A-1 283 947).

Es ist des weiteren bekannt, die Schnecke eines Extruders im Entgasungsbereich mit einem Stauring und zusätzlich das Gehäuse mit einer axial verschiebbaren Hülse zu versehen. Dies erfolgt zum Zwecke einer Durchsatzregelung der geförderten Kunststoffmasse, bevor sie entgast wird. Zusätzliche Hilfen zur Aufteilung der Masse können dabei in Form von Längsrippen an der Schnecke und/oder gehäusefesten Stiften vorgesehen sein. Entgast wird mit Hilfe eines im Gehäuse angeordneten Entgasungskanals (DE-A-2 160 062).

Es ist des weiteren ein Schneckenextruder mit translatorisch bewegter Schnecke und radialen gehäusefesten Knetbolzen bekannt. Der Extruder weist einen Stauring auf, dessen Innenkontur mit einem Schneckenflügel eine gleich große Spaltbreite für die geförderte Masse bildet. Die dadurch schlauchähnlich ausgeformte Masse wird danach entgast. Dies erfolgt durch einen Gasabzugsstutzen. Die vorhandenen Knetbolzen verhindern, daß sich die Masse zusammen mit der Schnecke umlaufend bewegt (CH-A-420 580). Die bekannten Entgasungskanäle sind schachtförmig in der Schneckengehäusewand ausgebildet und erstrecken sich über einen wesentlichen Teil des Schneckengehäuses.

Die bekannten Schneckenextruder zum Entgasen verfügen über einen Entgasungskanal, über den aufgrund des angelegten Vakuums die Kautschukmischung oder Kunststoffmasse entgast wird. Eine wirkungsvolle Entgasung bedingt zum einen eine homogene Aufbereitung in der Misch- und Homogenisierungszone und zum anderen eine nach Menge, Temperatur und Viskosität möglichst konstant in den Entgasungsbereich eingeförderte Masse. Außerdem soll die Entgasung bzw. Evakuierung der im Entgasungsbereich entspannt vorliegenden Masse möglichst an vielen Stellen und gleichzeitig erfolgen. Das ist mit den bekannten Entgasungsschneckenextrudern nicht gewährleistet.

Aufgabe der Erfindung ist es, bei der Verarbeitung von hochviskosen Kautschukmischungen und ähnlich sich verhaltenden Thermoplasten mit einem Schneckenextruder der eingangs genannten Art unter Vermeidung von wesentlichem Scherfließen durch Aufteilen der geförderten Masse in zahlreiche umgeschichtete, oberflächenvergrößerte Masseteilströme eine mechanisch und thermisch gut vergleichmäßigte Masse auch effektiv und günstig zu entgasen und dabei die Nachteile der bisherigen Entgasungsextruder zu vermeiden.

Diese Aufgabe wird nach der Erfindung dadurch gelöst, daß der Schneckenraum des Entgasungsabschnittes durch Stifte oder Zapfen entgasbar ist, die Entgasungskanäle aufweisen.

Die Stifte oder Zapfen sind radial in den Schnekkenraum hineinragend angeordnet, wobei der Schneckensteg an dieser Stelle unterbrochen ist. Die geförderte entspannte Masse umströmt diese Stifte und Zapfen und wird durch diese Stifte entgast, da diese zu diesem Zweck Entgasungskanäle aufweisen.

Bevorzugt sind die Stifte umfangsverteilt, einem Stiftekranz vergleichbar angeordnet. Vorteilhaft sind zwei solcher Stiftekranzanordnungen, die in einem gewissen Axialabstand voneinander angeordnet sind. Die Stifte sind mit Kanälen versehen, deren Öffnungsmündung sich in mittelbarer Nähe der Gehäusewand befindet.

Auf diese Weise können Gase und Feuchtigkeitsteilchen an zahlreichen Stellen des Entgasungsbereichs problemlos aus der Masse abgesaugt werden. Des weiteren ist es möglich, durch getrennte Saugleitungen an verschiedenen Saugstellen jeweils ein höheres oder niedriger erforderliches Vakuum anzulegen, so daß nicht nur wirkungsvoll, sondern auch in wirtschaftlich vertretbaren Grenzen entgast werden kann.

Stifte mit Bohrungen sind an sich bekannt. Sie sind zum Einspritzen von Dampf oder Flüssigkeiten vorgeschlagen worden. Ihre Zielsetzung und Anwendung ist jedoch mit der Stifteanordnung nach der Erfindung nicht zu vergleichen. Dem verfolgten Zweck nach sind sie grundverschieden.

Nach dem Zweck der Erfindung sind die Stifte Hilfsmittel zum bestmöglichen Entgasen. Sie sind baulich günstig ebenso wie die Mischstifte auf dem Umfang des Schneckengehäuses anzuordnen, einfach zu bedienen, und sie sind günstig und zuverlässig an die eine und gegebenenfalls weitere Absaugevorrichtung anzuschließen.

Nach einer weiteren Ausgestaltung der Erfindung ist eine besondere Stifteanordnung dazu bestimmt, das erforderliche Massestaumittel am Eingang des Entgasungsbereichs zu bilden. Der Entgasungsabschnitt umfaßt — wie an sich allgemein bekannt ist — ein Massestaumittel und eine druckreduzierte Zone. In der Regel ist das Staumittel ein Stauring, das den Massedruck erhöht. In der folgenden druckreduzierten Zone entspannt sich die Mischung. In dieser Phase ist die Masse günstig zu entgasen.

Das Staumittel, das hier den Stauring ersetzt, ist auch aus Stiften gebildet, die in mindestens einer zur Schneckenachse quer angeordneten Ebene vorliegen. Die Stifte sind verhältnismäßig zahlreich, umfangsverteilt und eng benachbart angeordnet. Sie bilden einen dichten Stiftekranz. Bevorzugt kann er 12 Stifte und mehr umfassen. Er ist aufgrund dieser Anordnung ein geeignetes Staumittel, das im strömenden Material einen verhältnismäßig hohen, zum Stauen erforderlichen Widerstand aufbaut und dennoch ausreichend große Durchströmquerschnitte zwischen den Stiften bietet. Im Vergleich zu den Mischstifteanordnungen, die in der Regel 6 bis 8 Stifte umfassen, sind die Stifte des Staumittels wesentlich enger aneinander angeordnet. Durch diese besondere Stifteanordnung wird der Massestrom in eine Vielzahl Teilströme aufgeteilt, die bis in den Schneckenkanalgrund reichen, wodurch gewährleistet ist, daß eingeschlossene Luft- oder Gasblasen besser als nach den bekannten Maßnahmen nun über einen wesentlich vergrößerten Querschnitt aufgeschlossen und für die Entgasung freigesetzt werden.

Die Erfindung wird anhand in der Zeichnung dargestellter Ausführungsbeispiele erläutert. Es zeigt

Fig. 1 einen Schneckenextruder gemäß Erfindung im Längsschnitt und Ausschnitt (schematisch),

Fig. 2 einen Querschnitt nach der Linie A-A der Fig. 1,

Fig. 3 einen Querschnitt nach der Linie B-B der Fig. 1,

Fig. 4 einen Querschnitt nach der Linie C-C der Fig. 1;

Fig. 5 eine andere Ausführungsform eines Schneckenextruders im Längsschnitt und Ausschnitt (schematisch),

Fig. 6 einen Querschnitt nach der Linie D-D der Fig. 1;

Fig. 7 eine weitere Ausführungsform eines Schneckenextruders im Längsschnitt und Ausschnitt (schematisch);

Fig. 8 Einzelheiten eines Stiftes im Querschnitt.

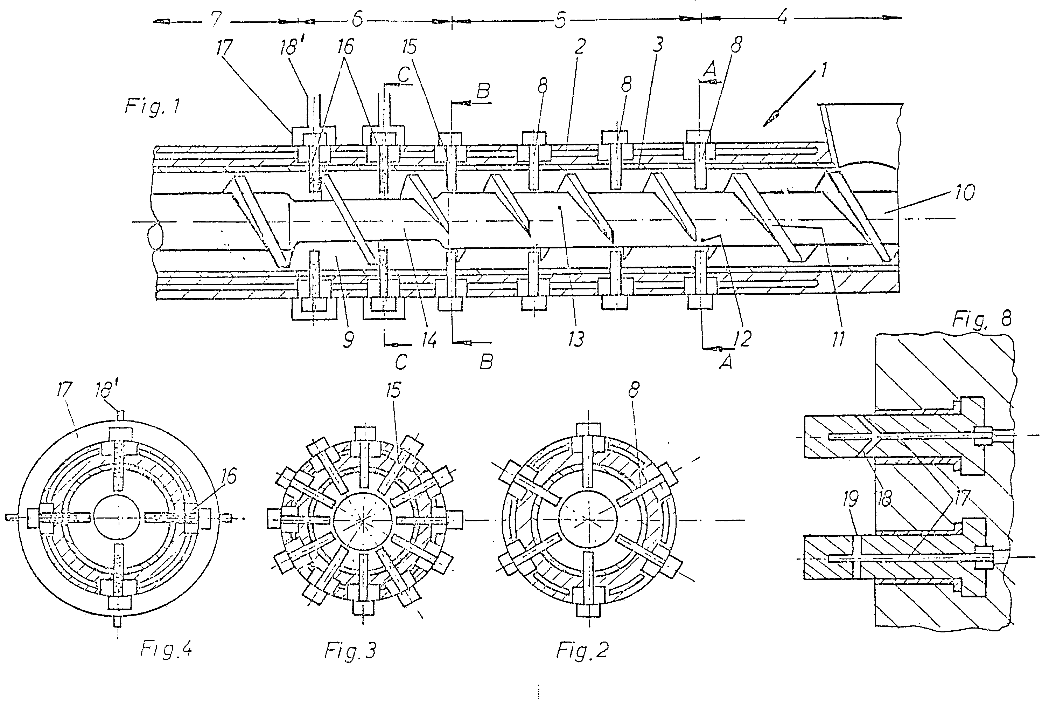

Der in Fig. 1 dargestellte Schneckenextruder 1 besteht im wesentlichen aus einem Schneckengehäuse 2, ausgebildet für Temperierflüssigkeitskreislauf, mit einer zylindrischen Bohrung 3 und einer darin drehend bewegbaren, axial festgelegten Schnecke 10.

Die Einzugszone des Extruders ist mit 4, eine Misch- und Homogenisierungszone ist mit 5, eine Entgasungszone ist mit 6 und die Ausstoßzone ist mit 7 bezeichnet.

In der Einzugszone 4 ist die Schnecke 10 mit nichtdurchbrochenen Schneckenstegen 11 versehen. In der Misch- und Homogenisierungszone weist die Schnecke 10 durchbrochene Schneckenstege auf. Die Durchbrüche sind mit 12 bezeichnet.

An diesen Durchbruchstellen weist das Schneckengehäuse 2 radial angeordnete Stifte 8 auf. Sie sind umfangsverteilt angeordnet und bilden einen Stiftekreuz, wie aus Fig. 2 erkennbar ist. Sie ragen vom Gehäuse 2 bis in den mit 9 bezeichneten Schneckenraum hinein, der von der Gehäusebohrungswand 3, der Schneckenoberfläche 13 und den Schneckenstegen begrenzt ist.

Die Stifte erfüllen den Zweck, die geförderte Masse — ob Kautschukmischung oder Thermoplast — gut zu durchmischen und sowohl mechanisch als auch thermisch zu homogenisieren. Diese Wirkung ist unabhängig von der Schneckengangtiefe und insoweit unabhängig vom Schneckendurchmesser mit guten Ausstoßleistungen zu erzielen.

Durch Anordnung der Stifte wird das Prinzip der Stromteilung und Umlegung des Massestromes quer zur Strömungsrichtung angewandt mit dem Zweck, quer zur Strömungsrichtung befindliche Schichtgrenzen in Strömungsrichtung zu drehen, wesentlich zu dehnen und damit zu vergrößern und die getrennten Schichten mit den anderen Schichten wieder aneinanderzulagern.

Dieser Vorgang der fortlaufend geschaffenen neuen Oberflächen und ihre Vergrößerung unter weitgehender Vermeidung von Scherfließen bewirkt einen hervorragenden Misch- und Homogenisiereffekt bei thermisch schonender Behandlung.

Bei der Entgasung werden den hochviskosen Kautschukmischungen bei Verarbeitungstemperaturen von etwa 100°C verdampfte Feuchtigkeit und eingeschlossene Luft- und andere Gaspartikel, die sich z. B. aus niedrigsiedenden Weichmachern gebildet haben, entzogen.

Dies ist auch bei der Herstellung von Moosgummiprofilen von hoher Bedeutung; denn nur das bei höheren Temperaturen gasende Treibmittel führt zur gewünschten Zellenbildung, damit ein fein und gleichmäßig poröses Extrudat mit guten Maßtoleranzen entstehen kann.

Der Schneckenextruder weist unmittelbar vor dem Entgasungsbereich 6 zunächst eine besondere Anordnung von Stiften 15 auf. Sie sind umfangsverteilt angeordnet und zu einem verhältnismäßig dichten Stiftekranz ausgebildet. Fig. 3 zeigt dies deutlich erkennbar. Sinn dieser Anordnung ist, ein Massestaumittel vorliegen zu haben, das den Druck in der Masse erhöht. Die eigentliche Entgasungszone 6 weist einen im Volumen vergrößerten Schneckenraum auf, in dem der herrschende Druck verhältnismäßig niedrig ist. Im vorliegenden Falle wird dies durch eine Schneckenkernreduzierung erreicht, wie das bei 14 angezeigt ist. In dieser Zone entspannt sich die Masse und vergrößert ihr Volumen und ist gut zu entgasen.

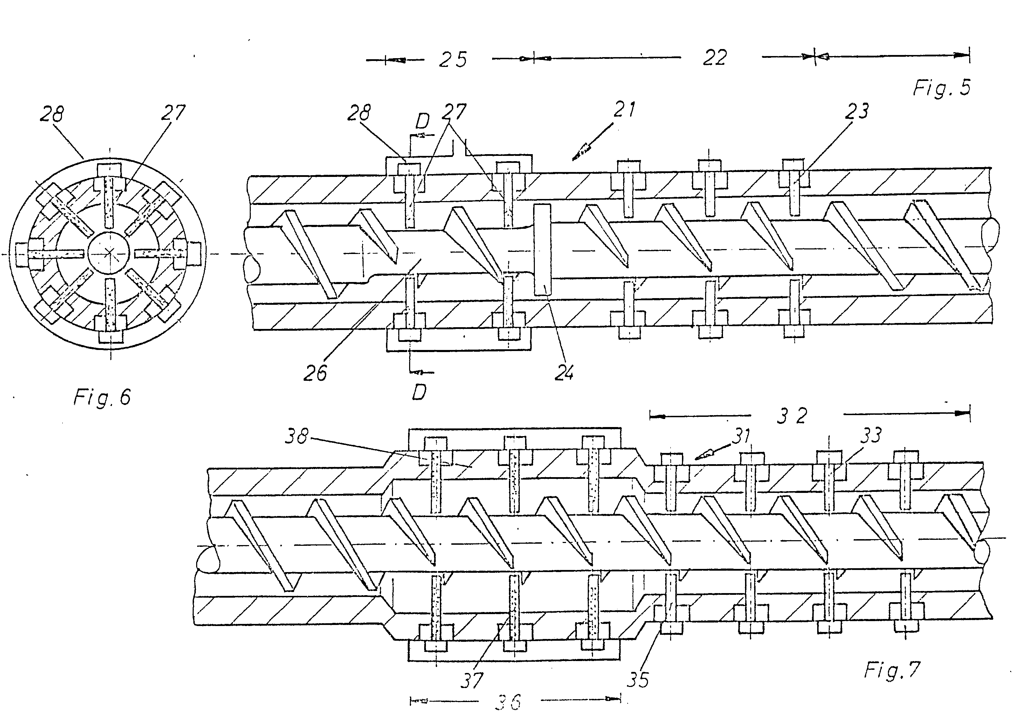

Zu diesem Zweck sind weitere Stifte 16 vorgesehen. Auch sie sind umfangsverteilt angeordnet und in ein, zwei oder falls erforderlich mehr Stiftekränzen angeordnet. Sie ragen in den zu entgasenden Schneckenraum 9 hinein und sind aufgrund ihrer vorhandenen Anzahl, z. B. 4 Stifte je Kranz — vgl. Fig. 4 —, an zahlreichen Stellen des Schneckenraumes unmittelbar vorhanden, um Gase und Dämpfe abzusaugen. Die Stifte des in Förderrichtung ersten Kranzes sind um 45° gegenüber dem des zweiten Kranzes versetzt angeordnet. Die Stifte 16 weisen Bohrungen 17 und Querkanäle 18, 19 auf, wie das in der Fig. 8 zu erkennen ist. Die (gestrichelt) eingezeichnete Linie deutet die Gehäusebohrungsoberfläche an. Die Absaugkanäle mit ihren Mündungsöffnungen sind in der Nähe dieser Gehäusebohrung angeordnet. Die Stifte 16 sind von einem geeigneten, nach außen abgedichteten Gehäuse 17 umfaßt, das durch Leitungen 18 oder andere Hilfsmittel mit einer (nichtdargestellten) Vakuumpumpe verbunden ist.

Die Entgasung mittels angelegtem Vakuum erfolgt in einer Schneckenzone, in der durch größere Schneckengangtiefe, vergrößerten

Schneckenabstand oder Schneckengehäusebohrungserweiterung ein größeres Volumen des Schneckenraumes vorliegt.

Die Entgasung erfolgt im Schneckenextruder 1 durch Entgasungsstifte 16, die in einer Ebene quer zur Schneckenachse in umfangsverteilter Anordnung vorgesehen sind. Es sind hierbei zwei im axialen Abstand gleiche Stiftekränze aus Stiften 16 vorhanden. Jeder Stiftekranz weist in der Regel vier bis sechs Stifte auf. Diese Anzahl ist aber nicht bindend.

Der in Fig. 5 dargestellte Schneckenextruder 21 ist im Grundaufbau ähnlich wie der Extruder nach Fig. 1 ausgebildet. Auch er weist eine Misch- und Homogenisierungszone 22 mit Mischstiften 23 auf. Das Massestaumittel ist hierbei jedoch entsprechend Stand der Technik als Stauring 24 ausgebildet. Die Entgasungszone 25 besteht aus dem im Schneckenkern 26 reduzierten Schneckenteil und den Entgasungsstiften 27.

Diese sind jeweils umfangsverteilt angeordnet und umfassen je Umfangsreihe z. B. acht Stifte. Die Stifte können in der in Förderrichtung ersten Reihe gegenüber denen der zweiten Reihe um einen Winkel in Umfangsrichtung versetzt angeordnet sein. Fig. 6 zeigt die Umfangsanordnung eines Stiftekranzes. Die sämtlichen Entgasungsstifte 27 sind von einem außen am Schneckengehäuse angeordneten Gehäuse 28 umfaßt, an das die Leitungen, Kanäle o. dgl. Mittel, angeschlossen sind, die mit der (nichtdargestellten) Vakuumpumpe verbunden sind.

Der in Fig. 7 dargestellte Schneckenextruder 31 ist im Grundaufbau ähnlich wie der Extruder nach Fig. 1 ausgebildet. Er weist Mischstifte 33 in der Misch- und Homogenisierungszone 32, Staustifte 35 und Entgasungsstifte 37 in der Entgasungszone 36 auf. Diese ist durch eine radiale Erweiterung 38 des Schneckengehäuses gekennzeichnet.

Die Stifteanordnung der Stifte 35 entspricht im wesentlichen der nach Fig. 3 und die Stifteanordnung der Stifte 37 entspricht im wesentlichen der nach Fig. 4. Die einzelnen Stiftekränze sind bevorzugt in Umfangsrichtung zueinander versetzt angeordnet, z. B. um einen Winkel von 45°.

## Patentansprüche

1. Schneckenextruder zum Mischen, Homogenisieren und Entgasen von hochviskosen Kautschukmischungen und ähnlich sich verhaltenden Thermoplasten, der aus einem Schneckengehäuse (2) mit zylindrischer Gehäusebohrung (3) und darin drehbarer, ortsfest gelagerter Schnecke (10) besteht, die einen Einzugsabschnitt (4), einen Misch- und Homogenisierungsabschnitt (5; 22; 32) und einen ein Massestaumittel (15; 24; 35) und eine in Extrusionsrichtung anschließende druckreduzierte Zone (14; 26; 38) umfassenden Entgasungsabschnitt (6; 25; 36) aufweist, dessen Schneckenraum (9) über einen Kanal, Schacht o. dgl. Mittel (17, 18') im Schnekkengehäuse (2) mit der Atmosphäre oder einer Unterdruckquelle verbunden ist, sowie einen Ausstoßabschnitt (7) aufweist, und bei dem vom Schneckengehäuse (2) radial nach innen sich erstreckende, umfangsverteilt angeordnete Stifte oder Zapfen (8, 16, 23, 27, 33, 37) und radial entsprechend unterbrochene Schneckenstege (12) vorliegen, dadurch gekennzeichnet, daß der Schneckenraum (9) des Entgasungsabschnittes (6; 25; 36) durch Stifte oder Zapfen (16; 27; 37) entgasbar ist, die Entgasungskanäle (17—19) aufweisen.

2. Schneckenextruder nach Anspruch 1, dadurch gekennzeichnet, daß die Stifte (16; 27; 37) mindestens einen Stiftekranz bilden, der aus auf dem Gehäuseumfang angeordneten Stiften besteht und an eine Vakuumquelle anschließbar ist.

3. Schneckenextruder nach Anspruch 1, dadurch gekennzeichnet, daß zwei Stiftekränze vorgesehen sind, die aus jeweils auf dem Gehäuseumfang angeordneten Stiften (16; 27; 37) bestehen, wobei die Stiftekränze im Axialabstand zueinander angeordnet sind, und daß diese Stifte an eine Vakuumquelle anschließbar sind.

4. Schneckenextruder nach Anspruch 1 bis 3, dadurch gekennzeichnet, daß bei Anordnung von mehr als einem Stiftekranz die eine Stifteanordnung gegenüber der weiteren um einen Drehwinkel zueinander versetzt vorliegt.

5. Schneckenextruder nach Anspruch 3 und 4, dadurch gekennzeichnet, daß die Stiftekränze an verschiedene Unterdruck erzeugende Vorrichtungen anschließbar sind.

6. Schneckenextruder nach einem der Ansprüche 1 bis 5, gekennzeichnet durch eine axial der Druckreduzierungszone vorgeordnete Stifteanordnung, die aus auf dem Gehäuseumfang dicht benachbart angeordneten radial vom Schneckengehäuse (2) sich erstreckenden Massestaumittel bildenden Stiften (15) besteht (Fig. 3).

## Claims

1. Screw extruder for mixing, homogenising and degassing highly viscous rubber mixtures and thermoplastics materials having similar characteristics, which extruder comprises a screw housing (2) provided with a cylindrical housing bore (3) and a fixedly mounted screw (10) which is rotatable therein and has a feed section (4), a mixing and homogenising section (5; 22; 32) and a degassing section (6; 25; 36) which includes a mass cramming means (15; 24; 35) and a pressure-reduced zone (14; 26; 38) which follows in the direction of extrusion, the screw chamber (9) of said degassing section being connected to the atmosphere or a source of reduced pressure by a conduit, shaft or similar means (17, 18) in the screw housing (2), and the screw also has a discharge section (7), and wherein pins or journals (8, 16, 23, 27, 33, 37) are provided, which extend radially inwardly from the screw housing (2) and are distributed over the periphery thereof, and screw flights (12) are provided which are discontinuous in a radial manner, characterised in that the screw chamber (9) of the degassing section (6; 25; 36) is degassable by pins or journals (16; 27; 37) which have degassing channels (17—19).

2. Screw extruder according to claim 1, characterised in that the pins (16; 27; 37) form at least one ring of pins which comprises pins disposed on the housing periphery and which is connectable to a vacuum source.

3. Screw extruder according to claim 1, characterised in that two rings of pins are provided, aech of which comprise pins (16; 27; 37) disposed on the housing periphery, wherein the rings of pins are spaced axially from one another and these pins are connectable to a vacuum source.

4. Screw extruder according to claims 1 to 3, characterised in that, when more than one ring of pins are provided, one arrangement of pins is offset relative to the other arrangements by a rotational angle.

5. Screw extruder according to claims 3 and 4, characterised in that the rings of pins are connectable to various devices which produce reduced pressure.

6. Screw extruder according to one of claims 1 to 5, characterised by a pin arrangement which is axially disposed upstream of the pressure reducing zone and comprises pins (15) which are disposed closely adjacent one another on the housing periphery, extend radially from the screw housing (2) and form mass cramming means (Fig. 3).

## Revendications

1. Extrudeuse à vis sans fin pour le mélange, l'homogénéisation et le dégazage de mélanges caoutchoutés de grande viscosité et de matières thermoplastiques de comportement analogue, qui se compose d'un carter de vis sans fin (2) pourvu d'un alésage cylindrique (3) dans lequel est montée à rotation dans une position fixe, une vis sans fin (10), qui comporte une partie d'entrée (4), une partie de mélange et d'homogénéisation (5; 22; 32) et une partie de dégazage (6; 25; 36) comportant un moyen de retenue de masse (15; 24; 35) et une zone de pression réduite (14; 26; 38) placée à la suite dans la direction d'extrusion, dont la chambre de vis sans fin (9) est reliée par l'intermédiaire d'un canal, d'un conduit ou d'un moyen analogue (17; 18') prévu dans le carter de vis sans fin (2) avec l'atmosphère ou avec une source de dépression, ainsi qu'une partie d'éjection (7), et dans laquelle il est prévu des broches ou des fiches (8, 16, 23, 27, 33, 37) s'étendant radialement vers l'intérieur à partir du carter de vis sans fin (2) et réparties sur la périphérie ainsi que des filets de vis sans fin (12) interrompus radialement en correspondance, caractérisée en ce que le volume de vis sans fin (9) correspondant à la partie de dégazage (6; 25; 46) peut être dégazé par des broches ou des fiches (16; 27; 37) qui comportent les canaux de dégazage (17—19).

2. Extrudeuse à vis sans fin selon la revendication 1, caractérisée en ce que les broches (16; 27; 37) forment au moins une couronne de broches, qui se compose de broches disposées sur la périphérie du carter et qui peut être reliée à une source de vide.

3. Extrudeuse à vis sans fin selon la revendication 1, caractérisée en ce qu'il est prévu deux couronnes de broches qui se composent chacune de broches (16; 27; 37) disposées sur la périphérie du carter, les couronnes de broches étant espacées axialement l'une de l'autre, et en ce que ces broches peuvent être reliées à une source de vide.

4. Extrudeuse à vis sans fin selon les revendications 1 à 3, caractérisée en ce que, lors de la disposition de plus d'une couronne de broches, une couronne de broches est décalée angulairement par rapport à l'autre.

5. Extrudeuse à vis sans fin selon les revendications 3 et 4, caractérisée en ce que les couronnes de broches peuvent être reliées à différents dispositifs produisant une dépression.

6. Extrudeuse à vis sans fin selon une des revendications 1 à 5, caractérisée par un ensemble de broches placé axialement en amont de la zone de réduction de pression et qui se compose de broches (15) formant un moyen de retenue de masse, s'étendant radialement à partir du carter de vis sans fin (2) et placé dans des positions étroitement adjacentes sur la périphérie du carter (fig. 3).

Fig.1

Fig.2

Fig.3

Fig.4

Fig.8

Fig. 5

Fig. 6

Fig. 7

0 082 494